Europäisches Patentamt

(19) European Patent Office

Office européen des brevets

(11) **EP 0 723 840 A1**

## (12) EUROPEAN PATENT APPLICATION
published in accordance with Art. 158(3) EPC

(43) Date of publication:
31.07.1996 Bulletin 1996/31

(51) Int. Cl.⁶: **B25J 9/06**

(21) Application number: 94926704.1

(86) International application number:
PCT/JP94/01147

(22) Date of filing: 13.07.1994

(87) International publication number:
WO 95/02487 (26.01.1995 Gazette 1995/05)

(84) Designated Contracting States:
DE FR GB

(30) Priority: 13.07.1993 JP 173085/93
08.10.1993 JP 253427/93
15.10.1993 JP 258457/93

(71) Applicant: KOMATSU LTD.
Minato-ku Tokyo 107 (JP)

(72) Inventors:
• YOSHINADA, Hiroshi
1200, Manda Hiratsuka-shi KanaGawa 254 (JP)
• ASHIKAGA, Shigeaki
1200, Manda Hiratsuka-shi KanaGawa 254 (JP)
• OKAMURA, Kenji
1200, Manda Hiratsuka-shi Kanagawaa 254 (JP)

• OTSUBO, Kazuhiko
1200, Manda Hiratsuka-shi Kanagawa 254 (JP)
• KATO, Toshio
23, tsu Futsu-machi Komatsu-shi Ishikawa (JP)
• KITA, Ikuo
23, tsu Futsu-machi Komatsu-shi Ishikawa (JP)
• OURA, Minoru
23, tsu Futsu-machi Komatsu-shi Ishikawa (JP)
• TAKEUCHI, Shinji
Komatsu-shi Ishikawa 923 (JP)

(74) Representative: Fiener, Josef
European Patent Attorney,
Maximilanstrasse 57,
Postfach 1249
D-87712 Mindelheim (DE)

## (54) MANIPULATOR

(57) An object of the present invention is to improve the control accuracy of a manipulator. As a main point of this invention, a first arm of a service machine (21) consists of a four-joint link mechanism (7) wherein two joints (7c, 7d) at one-side ends of a first arm (7) of the four-joint link are disposed rotatably on a machine base (2a) while two joints (7a, 7b) at the other-side ends of the first arm (7) are disposed rotatably on a bracket (5). Furthermore, two joints (12a, 12b) at one-side ends of a second arm (12) of the service machine (21) and one end (9a) of an actuator (9) for driving the second arm (12) are disposed rotatably on the bracket (5). A first rotational angle sensor (22) for detecting an angle of rotation of the first arm (7) and a second rotational angle sensor (23) for detecting an angle of rotation of the second arm (12) are provided on the bracket (5).

FIG.1(a)

FIG.1(b)

## Description

### TECHNICAL FIELD

The present invention relates to a manipulator for actuating a working tool in accordance with the operation of a control lever.

### BACKGROUND ART

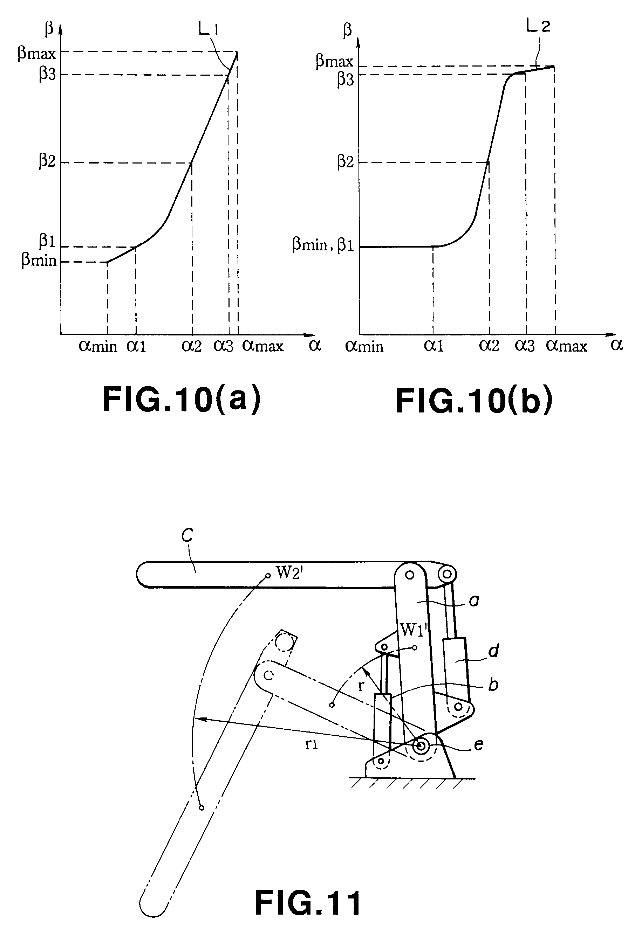

A working tool of a conventional manipulator, especially autonomously moving manipulator used for outdoor construction work and the like, has a structure such as that shown in Fig. 11.

Specifically, an arm (second arm) $c$ is attached to the tip of the boom (first arm) $a$ of a working tool, and a cylinder $d$ for driving the arm $c$ is also attached to the boom $a$. Therefore, when the boom a is driven by a boom cylinder $b$, the attitude of the arm $c$ changes and a large arc is described despite the fact that the arm cylinder $d$ has not been actuated. For this reason, the inertial mass load applied to the boom cylinder $b$ is extremely large, the operability of the control lever is inadequate, and it is very difficult to satisfactorily control the working tool.

In view of this situation, an object of a first invention of the present invention is to improve operability and to control the attitude of the working tool precisely by reducing the inertial mass load applied to the actuator for driving the first arm.

It should be noted that in a master/slave type of manipulator in which a working tool is the slave and a control lever resembling the working tool is the master, the attitude angles of the working tool are controlled in such a way that zero difference is produced between the current attitude angles of the working tool and the slave target attitude angles that correspond to the operating angles of the control lever.

In such cases, the attitude angles of the working tool, that is, the rotational angles of the arms constituting the working tool, must be detected with the aid of potentiometers or other angle sensors.

With a working tool having the above-described structure, however, the potentiometers cannot be mounted anywhere but in the foundation component of the boom $a$. The foundation component of the boom $a$, located inside a revolving frame, has poor serviceability because of space constraints and is difficult to adjust. In addition, a dedicated revolving frame must be designed in order to prevent the potentiometers and other components from interfering with each other, and this inevitably entails high costs.

In view of this situation, an object of a second invention of the present invention is to improve the above-mentioned operability, to achieve better control accuracy, and to be able to detect the attitude angles of the working tool at a lower cost and with good serviceability.

It should also be noted that when a working tool consisting of a plurality of arms and having multiple degrees of freedom is operated, it is effective from the standpoint of better operability to prepare a working tool (slave) and a control lever (master) having a similar shape and to operate the control lever within an operating range similar to the actuation range of the working tool.

It is, however, not always possible to achieve similarity between the actuation range needed for the working tool, and the operating range of a control lever within which comfortable operation is possible without undue burden being placed on the operator. Sometimes it is even better to make the operating range of the lever not similar in order to reduce the burden placed on the operator, improve operability, and achieve better control accuracy.

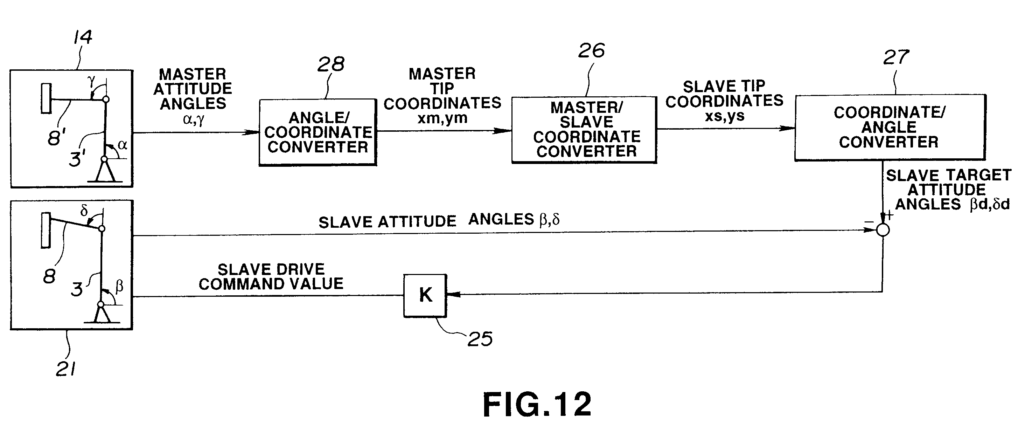

Fig. 12 shows an example of a conventional "non-similarity" type of a control lever 14 having two degrees of freedom in a plane and consisting of a first arm 3 (3') and a second arm 8 (8') and a working tool 21.

Specifically, as shown in the figure,

(1) The attitude angle (control input) $\alpha$ of the first arm 3' of the master 14 and the attitude angle (control input) $\gamma$ of the second arm 8' are detected, these detected values $\alpha$ and $\gamma$ are applied to an angle/coordinate converter 28, and computing is performed in the abovementioned angle/coordinate converter 28 to accomplish conversion to the coordinate positions $xm$ and $ym$ of the tip of the master 14.

(2) The coordinate positions $xm$ and $ym$ of the tip of the master 21 are applied to a master/slave coordinate converter 26, and computing is performed in the above-mentioned master/slave coordinate converter 26 to accomplish conversion to the target coordinate positions $xs$ and $ys$ of the tip of the slave 21.

(3) The target coordinate positions $xs$ and $ys$ of the tip of the slave 21 are applied to a coordinate/angle converter 27, and computing is performed in the above-mentioned coordinate/angle converter 27 to accomplish conversion to the target attitude angles $\delta d$ and $\beta d$ of the slave 21.

(4) The attitude angle $\beta$ of the first arm 3 of the slave 21 and the attitude angle $\delta$ of the second arm 8 are detected, these detected current slave attitude angles $\beta$ and $\delta$ are compared with the target attitude angles $\beta d$ and $\delta d$, the respective differences are determined, and drive command values that correspond to the angle differences are outputted to the drive system of the slave 21.

In this control apparatus, the control inputs $\alpha$ and $\beta$ of the master 14 are set within a desired operating range, and conversion computing is performed in each of the converters 28, 26, and 27 in such a way that the slave 21 performs desired operations within this set operating range.

Processing in steps 1 and 3 above, however, requires solving primal kinematic problems and inverse kinematic problems, respectively, and thus necessitates complex computing, increases the burden on the computer, and requires a substantial computing time. Only CPUs with high computing power can therefore be used, and this inevitably entails high costs.

In view of this situation, an object of a third invention of the present invention is to accomplish "non-approximation" without the need for complex computing and to improve operability, that is, to achieve better control accuracy, at a low cost.

A bilateral master/slave principle is also known as a manipulator control principle.

This bilateral master/slave principle involves subjecting the grip of the control lever to the action of a load proportional to that applied to the working tool. It is therefore possible to allow the operator to feel the load applied to the working tool when operating a grip against this load, and to improve operability.

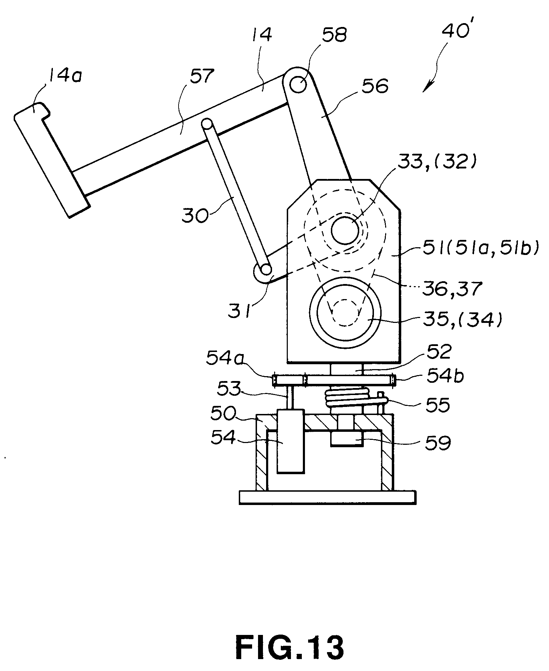

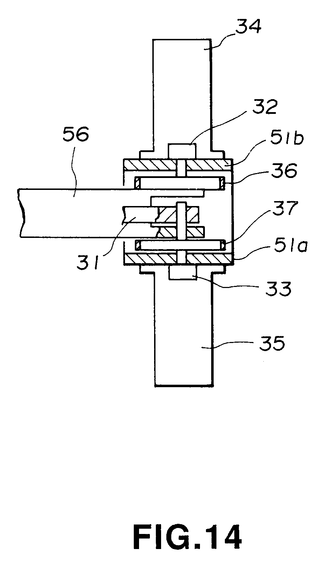

The above-mentioned conventional control apparatus 40' is shown in Figs. 13 and 14. The structure of the apparatus will now be described. Fig. 14 is a partial cross section of Fig. 13.

A frame 51 is rotatably attached to a base 50 in the horizontal direction. The base 50 is also provided with a swing motor 54 whose axle 53 is parallel to the axle 52 of the frame 51; this axle 53 and the axle 52 of the frame 51 are connected together via gears 54a and 54b. The frame 51 is oriented by a spring 55 in such a way that a neutral attitude is retained at all times, and this corresponds to the swing attitude of the above-mentioned rotation motor 54.

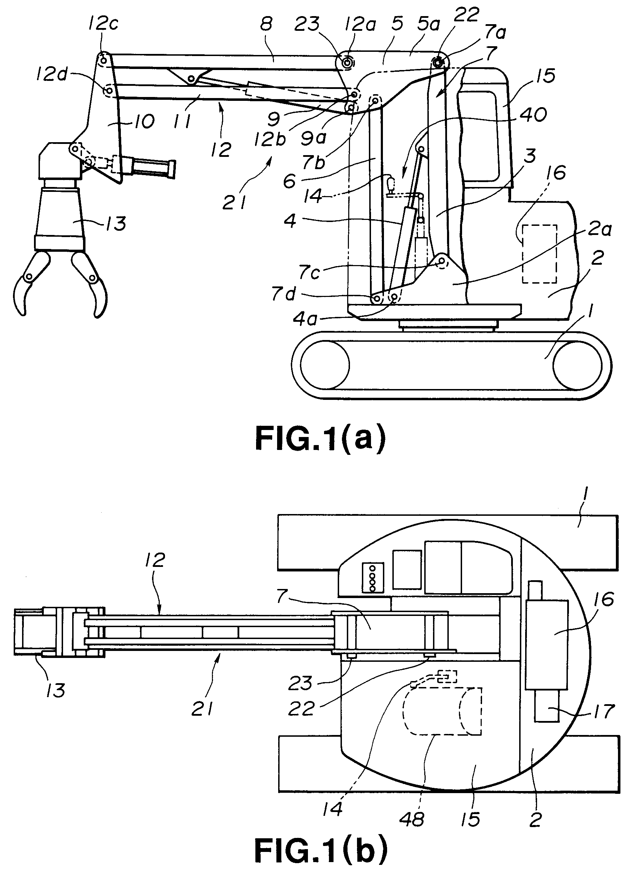

A control lever 14 comprises a first arm operating lever 56 that corresponds to the rotating attitude of the first arm 3 (see Fig. 1a) of a manipulator, and a second arm operating lever 57 that corresponds to the rotating attitude of a second arm 8 (see Fig. 1a), and these two operating levers 56 and 57 are rotatably connected together by a pin 58. The base of the above-mentioned first arm operating lever 56 is rotatably supported on a support member 51a of the frame 51. A swing potentiometer 59 detects the angle of rotation of the frame 51.

Meanwhile, a first parallel link 30 parallel to the first arm operating lever 57 is connected to the second arm operating lever 57, and a second parallel link 31 parallel to the second arm operating lever 57 is connected to the tip of the first parallel link 30. The base of this second parallel link 31 is supported on the other support member 51a of the frame 51 in a coaxial arrangement with the base of the above-mentioned first arm operating lever 56. The above-mentioned rotating bases are connected to a first arm potentiometer 32 and a second arm potentiometer 33 for detecting the respective angles of rotation.

A first arm motor 34 for exerting a rotational force that corresponds to the load applied to the first arm 3, and a second arm motor 35 for exerting a rotational force that corresponds to the load applied to the second arm 8 are supported by the corresponding support members 51a and 51b of the frame 51; the axle of the first arm motor 34 and the base of the first arm operating lever 56 are connected together by a belt 36; and the base of the second parallel link 31 of the axle of the second arm motor 35 and the base of the second arm operating lever 57 are connected in the same manner by a belt 37.

In the structure described above, the motors 54, 34, and 35 are each a DC motor or an AC motor. The swing motor 54 is caused to exert a swing force that corresponds to the load in the swing direction of the revolving superstructure 2 (see Fig. 1a) of an autonomously moving manipulator; the first arm motor 34 is caused to exert a rotational force that corresponds to the load in the direction of rotation of the first arm 3 in a similar manner; the second arm motor 35 is caused to exert a rotational force that corresponds to the load in the direction of rotation of the second arm 8; and the grip 14a of the control lever 14 is actuated against these forces. The rotation of the levers 56 and 57 for the first and second arms and the swing of the frame 51 actuated by this grip 14a are detected by the potentiometer 32, 33, and 59, and these detected signals are used as feedback signals when the first arm 3, second arm 8, and revolving superstructure 2 are driven and controlled by actuators.

With the above-described bilateral master/slave type of conventional control apparatus 40', however, the first arm motor 34 and the second arm motor 35 are mounted in such a way that, as shown in Fig. 13, the longitudinal directions of the motors 34 and 35 are at right angles to the planes of rotation of the first arm operating lever 56 and the second arm operating lever 57, respectively, so these motors 34 and 35 for the first and second arms protrude substantially to the left and right from the right side of the operator's seat. The resulting disadvantage is that the installation space of the control apparatus 40' is considerable in the transverse direction of a cabin 15 (see Fig. 1b), making it impossible to accommodate this space inside a cabin 15 with very small design dimensions.

In view of this situation, an object of a fourth invention of the present invention is to provide a bilateral master/slave type of control apparatus which can be reduced in size in the crosswise direction and readily accommodated in a small cabin.

An operator's seat 48 (Fig. 1b) is also disposed inside the cabin 15, and this seat 48 can slide backward and forward to fit the body size of the operator.

It is desirable that the control feel of the control lever 14 remain constant at all times when the seat 48 is slid in such a manner.

An object of a fifth invention of the present invention is to provide an apparatus capable of yielding constant operability even when the seat is slid.

## DISCLOSURE OF THE INVENTION

The main invention of the first invention of the present invention is that a manipulator for driving and controlling a working tool in accordance with the operation of a control lever is provided with a working tool configured in such a way that the first arm of the above-mentioned working tool consists of a four-joint link mechanism wherein two joints at one-side ends of this first arm are disposed rotatably on a base while two joints at the other-side ends of the above-mentioned first arm are rotatably linked to one-side ends of a second arm.

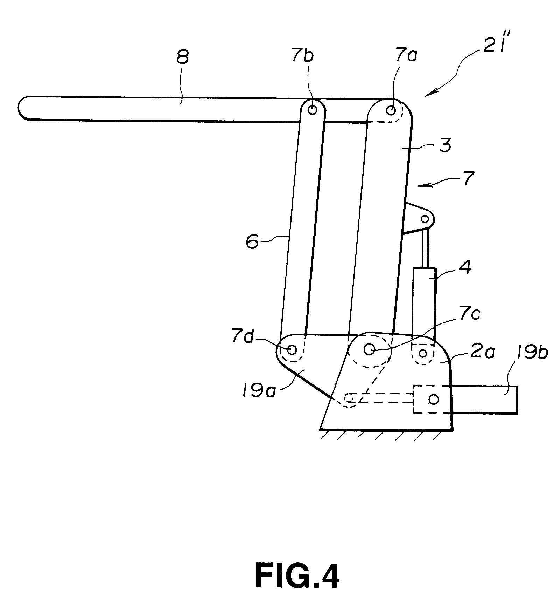

In the structure of the above-described first invention, the first arm of a working tool 21" consists of a four-joint link mechanism 7 wherein two joints 7c and 7d at one-side ends of the first arm 7 of this four-joint link are disposed rotatably on a base 2a while two joints 7a and 7b at the other-side ends of the first arm 7 are rotatably linked to one-side ends of a second arm 8, as shown in Fig. 4.

The result is that the presence of a four-joint link mechanism prevents the attitude of the second arm 8 from changing even when the first arm 7 is rotated.

This reduces the inertial mass load applied to an actuator 4 for driving the first arm 7.

In addition, the main invention of the second invention of the present invention is that, in a manipulator for controlling the attitude angles of the above-mentioned working tool on the basis of the operating angles of a control lever and the current attitude angles of the working tool, the working tool is configured in such a way that the first arm of the above-mentioned working tool consists of a four-joint link mechanism wherein two joints 7c and 7d at one-side ends of this first arm are disposed rotatably on a base 2a while two joints 7a and 7b at the other-side ends of the above-mentioned first arm are rotatably disposed on a bracket 5, and one end of the second arm of the above-mentioned working tool and one end of an actuator for driving the above-mentioned second arm are rotatably disposed on the above-mentioned bracket 5; a first rotational angle sensor 22 for detecting the angle of rotation of the above-mentioned first arm is disposed on the first arm attachment portion of the above-mentioned bracket 5, and a second rotational angle sensor 23 for detecting the angle of rotation of the above-mentioned second arm is disposed on the second arm attachment portion of the above-mentioned bracket 5; and the attitude angles of the above-mentioned working tool are controlled based on the operating angles of the above-mentioned control lever 14 and on the angles of rotation detected by the above-mentioned first and second rotational angle sensors.

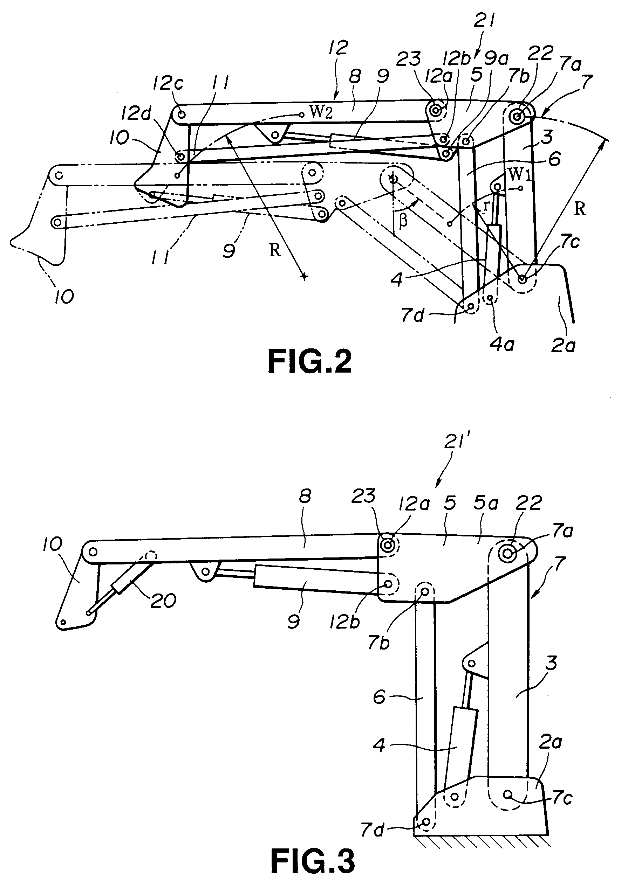

In the structure of the above-described second invention, the first arm of a working tool 21 consists of a four-joint link mechanism 7 wherein two joints 7c and 7d at one-side ends of the first arm 7 of this four-joint link are disposed rotatably on a base 2a while two joints 7a and 7b at the other-side ends of the first arm 7 are rotatably linked to a bracket 5, and one-side ends 12a and 12b of the second arm 12 of the working tool 21 and one end 9a of an actuator 9 for driving the above-mentioned second arm 12 are disposed rotatably on the bracket 5, as shown in Fig. 2.

Also disposed on the bracket 5 are a first rotational angle sensor 22 for detecting the angle of rotation of the first arm 7, and a second rotational angle sensor 23 for detecting the angle of rotation of the second arm 12. Therefore, rotational angle sensors are not disposed on the foundation component of the first arm 7. The result is that the presence of the four-joint link mechanism prevents the attitude of the bracket 5 from changing even when the first arm 7 is rotated. It is therefore possible to detect the relative angle of rotation $\beta$ of the first arm 7 with respect to the bracket 5 with the aid of the angle sensor 22 disposed on the bracket 5.

The attitude angles of the working tool 21 are controlled based on the operating angles of a control lever and on the angles of rotation detected by the first and second rotational angle sensors 22 and 23.

The main invention of the third invention of the present invention is that a master/slave type of manipulator for executing control by changing the attitude angles of a working tool on the slave side in accordance with the operating angles of a control lever installed on the master side comprises interpolation means for sampling a plurality of different operating angles from within a prescribed operating range of the above-mentioned control lever, correlating the above-mentioned sampled plurality of operating angles with the attitude angles of the above-mentioned working tool in such a way that the above-mentioned working tool is actuated within a desired actuation range when the above-mentioned control lever is operated within the above-mentioned desired operating range, and performing interpolation between the plurality of correlated angles;

storage means for storing the correlations between the operating angles of the control lever within the above-mentioned desired operating range and the attitude angles of the working tool within the above-mentioned desired actuation range determined by interpolation with the aid of the above-mentioned interpolation means; and

control means for determining, based on the correlations stored in the above-mentioned storage means, the attitude angles of the working tool that correspond to the current operating angles of the above-mentioned control lever, and controlling the attitude angles of the above-mentioned working tool in such a way that the determined attitude angles are obtained.

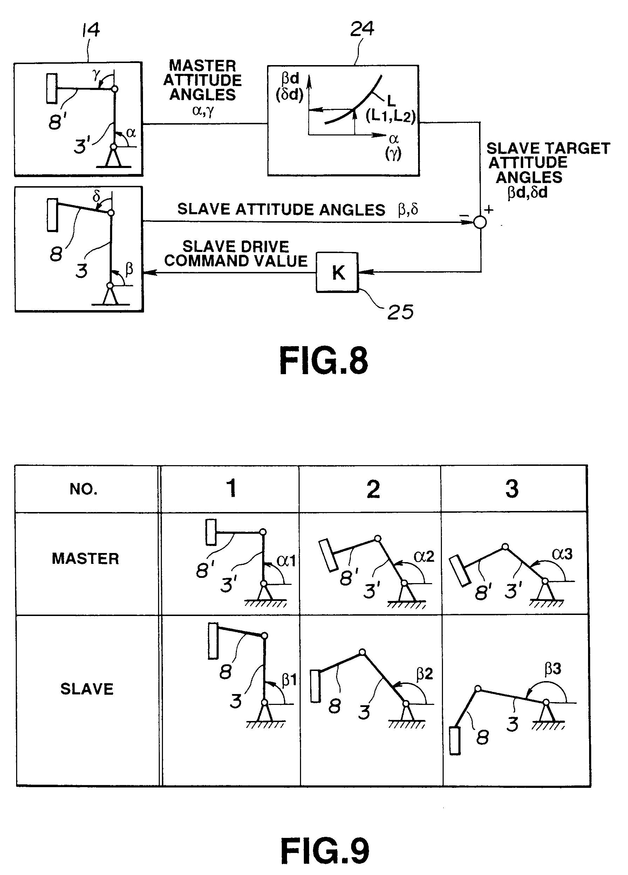

In addition, the above-mentioned third invention is configured in such a way that a plurality of different operating angles $\alpha_1$, $\alpha_2$, and $\alpha_3$ are sampled from within a desired operating range $\alpha_{min}$ to $\alpha_{max}$ of a control lever 14, the sampled plurality of operating angles $\alpha_1$, $\alpha_2$, and $\alpha_3$ are correlated with the attitude angles $\beta_1$, $\beta_2$, and $\beta_3$ of the working tool 21 in such a way that the working tool 21 is actuated within the desired actuation range βmin to βmax when the control lever 14 is operated within the desired operating range αmin to αmax, correlating the sampled plurality of operating angles α1, α2, and α3 with the attitude angles β1, β2, and β3 of the working tool 21, performing interpolation between the plurality of correlated angles, and determining correlations L1 and L2, as shown in Figs. 8, 9, 10a, and 10b. A storage means 24 stores the correlations L1 and L2 between the operating angles of the control lever within this desired operating range αmin to αmax and the attitude angles of the working tool within the desired actuation range βmin to βmax.

The attitude angle βd of the working tool that corresponds to the current operating angle α of the control lever 14 is determined based on the correlation L1 or L2 stored in the above-mentioned storage means 24, and the attitude angles of the working tool 21 are controlled in such a way that the determined attitude angle βd is obtained.

Thus, the third invention involves determining and storing correlations L1 and L2 in advance, allows only these correlations to be read, and dispenses with complex computations.

In addition, the fourth invention, which relates to a bilateral master/slave type of manipulator in which the attitude angles of a working tool positioned on the slave side are changed and controlled through rotation executed by a control lever located on the master side, and an operation reaction force corresponding to the load applied to the above-mentioned working tool is applied to the above-mentioned control lever, involves disposing an actuator near the above-mentioned control lever in such a way that the longitudinal direction of the above-mentioned actuator, which exerts the above-mentioned operation reaction force, is roughly parallel to the plane of rotation of the above-mentioned control lever.

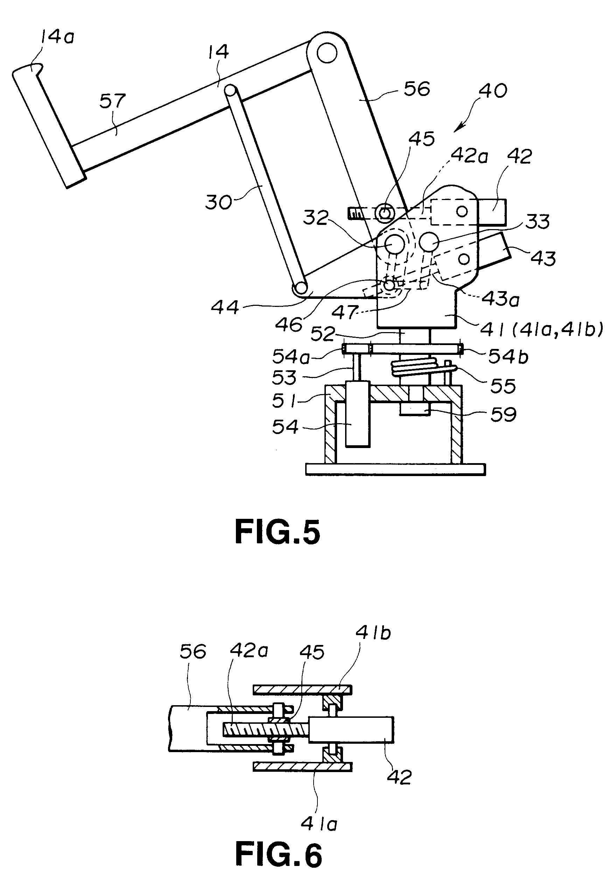

The structure of the fourth invention makes it possible to reduce the transverse dimensions of a cabin 15 by disposing actuators 42 and 43 in such a way that the longitudinal directions of the actuators 42 and 43 for creating operation reaction forces in the arm-operating levers 56 and 57 are roughly parallel to the planes of rotation of the arm-operating levers 56 and 57, as shown in Fig. 5.

In addition, the fifth invention involves disposing the operator's seat in such a way that it can move backward and forward, and disposing a control lever on one side of the above-mentioned seat in such a way that movement together with the above-mentioned seat is possible.

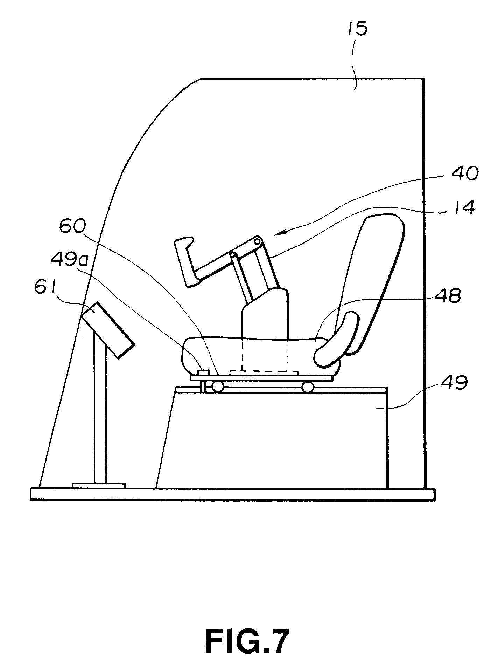

Because the fifth invention has such a structure, the control lever 14 moves together with the operator's seat 48 when the seat is moved forward and backward, and the position of the lever in relation to the operator remains the same, as shown in Fig. 7.

## BRIEF DESCRIPTION OF THE DRAWINGS

Figs. 1a and 1b are a front view and a plan view depicting the structure of an autonomous manipulator that embodies the manipulator pertaining to the present invention;

Fig. 2 is a diagram depicting the structure and illustrating the movement of the working tool of the manipulator shown in Fig. 1;

Fig. 3 is a diagram showing another structural embodiment of the working tool shown in Fig. 1;

Fig. 4 is a diagram showing yet another structural embodiment of the working tool shown in Fig. 1;

Fig. 5 is a side view depicting the structure of the control apparatus of the embodiment;

Fig. 6 is a cross section depicting a partial cross section of Fig. 5;

Fig. 7 is a side view depicting the manner in which the operator's seat is disposed inside the cabin;

Fig. 8 is a control block diagram depicting the structure of a control unit that embodies the attitude angle control apparatus of the master/slave type of manipulator pertaining to the present invention;

Fig. 9 is a diagram illustrating the contents stored in the table shown in Fig. 8 and depicting, as arm attitudes, the correlations between the operating angles of the master and the attitude angles of the slave;

Figs. 10a and 10b are diagrams illustrating the contents stored in the table shown in Fig. 8, and depicting in the form of graphs the correlation between the operating angles of the master and the attitude angles of the slave;

Fig. 11 is a diagram depicting the structure of a conventional working tool;

Fig. 12 is a control block diagram depicting the structure of a conventional control unit;

Fig. 13 is a diagram depicting the structure of a conventional control apparatus; and

Fig. 14 is a cross section depicting a part of the cross section in Fig. 13.

## BEST MODE FOR CARRYING OUT THE INVENTION

Embodiments of the manipulator pertaining to the present invention will now be described with reference to the figures.

Figs. 1a and 1b are diagrams depicting the structure of an autonomously moving manipulator for performing prescribed operations; Fig. 1a is a front view, and Fig. 1b is a view of Fig. 1a from above.

As shown in Figs. 1a and 1b, this manipulator comprises the following main components: a movable carriage 1, an upper revolving superstructure 2 that carries a control lever 14 (master), and a working tool 21 (slave). The control lever 14 is the main structural component of a control apparatus 40.

The upper revolving superstructure 2 is swingably mounted on the crawler-type movable carriage 1. Boom components, that is, the end 7c of a first arm 3 and the end 4a of a first arm drive cylinder 4 for rotatably driving this first arm 3, are attached to a support member 2a integral with this revolving superstructure 2 in such a way that the first arm 3 and the drive cylinder 4 can rotate. The end 7a of the first arm 3 is linked to an intermediate bracket 5 in such a way that the first arm 3 can rotate.

A first link 6 is mounted on the support member 2a and the bracket 5 in the same manner as the first arm 3 to ensure parallelism with the above-mentioned first arm 3. Specifically, one end 7d of the first link 6 is mounted on the support member 2a, and the other end 7b of the first link 6 is mounted on the first link 6 in such a way that the first link 6 can rotate.

The first arm 3, first link 6, support member 2a, and bracket 5 thus constitute a vertical link 7, which is a parallel link mechanism having four joints 7a through 7d.

In addition, one end 12a of a second arm 8 and one end 9a of a second arm drive cylinder 9 for rotatably driving this second arm 8 are attached to the above-mentioned intermediate bracket 5 in such a way that the second arm 8 and the drive cylinder 9 can rotate. The tip 12c of the second arm 8 is linked to a tip bracket 10 in such a way that the arm 8 can rotate.

A second link 11 is mounted on the intermediate bracket 5 and the tip bracket 10 in the same manner as the second arm 8 so that parallelism with the above-mentioned second arm 8 is ensured. Specifically, one end 12b of the second link 11 is mounted on the intermediate bracket 5, and the other end 12d of the second link 11 is mounted on the tip bracket 10 in such a way that the second link 11 can rotate.

The second arm 8, second link 11, intermediate bracket 5, and tip bracket 10 thus constitute a horizontal link 12, which is a parallel link mechanism having four joints 12a through 12d, in the same manner as the above-mentioned vertical link 7.

A hand 13 is rotatably mounted on the tip bracket 10 of the horizontal link 12, and workpieces are held and other prescribed operations performed with the aid of this hand 13.

A control lever 14, a cabin (control cabin) 15, an engine 16, a hydraulic pump 17, and other pieces of equipment necessary for moving and controlling the working tool are mounted on the above-mentioned revolving superstructure 2. Fig. 2 depicts a case in which the movable carriage 1 is a crawler type, but it is apparent that a tire type can also be used. An operator's seat 48 accommodating the operator is disposed inside the cabin 15.

The control apparatus 40 disposed inside the cabin 15 will now be described with reference to Figs. 5 and 6. Fig. 6 is a partial cross section of Fig. 5.

The same components as those used in conventional structures are labeled with the same symbols as in Figs. 13 and 14 and are omitted from the description.

A first arm motor 42 and a second arm motor 43 are supported between the support members 41a and 41b of a frame 41 in such a way that the corresponding shafts are aligned in the direction of rotation of a first arm operating lever 56 and a second parallel link 44, and can rock up and down. The axles 42a and 43a of the arm motors 42 and 43 are provided with lead screws having a substantial twist angle, and these axles 42a and 43a engage nut members 45 and 46 that are rotatably supported by the arm-operating lever 56 and the second parallel link 44.

A first arm potentiometer 32 for detecting the angle of rotation of the first arm operating lever 56 is directly connected to the spindle of the first arm operating lever 56, and a second arm potentiometer 33 for detecting the angle of rotation of a second arm operating lever 57 is linked to the rotating spindle of the second parallel link 44 via a parallel link mechanism 47.

In the structure described above, the rotational forces of the arm motors 42 and 43 are transmitted to the nut members 45 and 46 in engagement with the corresponding axles 42a and 43a, and the displacement of these nut members 45 and 46 results in the application of a load from the manipulator side to the first and second arm operating levers 56 and 57.

Meanwhile, when the arm-operating levers 56 and 57 are actuated against the above-mentioned load by a grip 14a, the motors 42 and 43 are rotated by the corresponding displacement of the nut members 45 and 46.

This embodiment is described with reference to an example in which DC motors, AC motors, or other axle-type motors are used as the motors 42 and 43, but it is also possible to use linear motors and other motors whose axes are oriented in the axial direction with respect to the main body. In such cases, the sliding axes of these motors are connected to the arm-operating levers via rack-and-pinion mechanisms.

In either of these cases this embodiment involves disposing the arm motors 42 and 43 in such a way that the longitudinal directions of the motors 42 and 43 are parallel to the plane of rotation of the control lever 14, so there is less projection beyond the sides of the operator's seat, and the interior of the cabin 15 can be made less spacious.

Fig. 7 depicts the manner in which the operator's seat 48 is disposed inside the cabin 15. The operator's seat 48 is mounted in such a way that it can be moved forward and backward with respect to a fixed portion 49, and fixed in any position with a fixing pin 49a. The above-mentioned control apparatus 40 is attached to the base frame 60 of the operator's seat 48 and allowed to change its position in the longitudinal direction together with the operator's seat 48. 61 is a display.

This structure allows the operator's seat 48 to be moved forward and backward inside the cabin 15 to fit the body size of the operator. Because the control apparatus 40 moves together with the operator's seat 48 in the process, the position of the control apparatus 40 does not change with respect to the operator, and the tactile feedback remains the same.

The working tool 21 is controlled in accordance with a conventional master/slave principle in which the above-mentioned control lever 14 functions as the master, and the working tool 21 as the slave. The attitude angles of a master/slave type of working tool 21, that is, the angles of rotation of the first arm 3 and second arm 8, are commonly controlled by feeding back these angles of rotation.

To detect the amount of feedback, a potentiometer 22 for detecting the angle of rotation $\beta$ of the first arm 3 is disposed on the attachment portion (rotation fulcrum) 7a of the first arm 3 at the outside surface 5a of the intermediate bracket 5, and a potentiometer 23 for detecting the angle of rotation $\delta$ of the second arm 8 is disposed in a similar manner on the attachment portion (rotation fulcrum) 12a of the second arm 8 at the outside surface 5a.

Because, as shown in Fig. 2, the vertical link 7 is a parallel link mechanism, expanding and contracting the first arm drive cylinder 4 will not change the attitude of the intermediate bracket 5 even when the attitude of the first arm 3 has changed. The second arm 8 will therefore move up and down while remaining parallel.

Thus, the attitude of the bracket 5 does not change, and only the attitude of the first arm 3 changes, so the relative angle of rotation $\beta$ of the first arm 3 with respect to the bracket 5 can be detected with the aid of the potentiometer 22 disposed on the above-mentioned bracket 5.

On the other hand, the relative angle of rotation $\delta$ of the second arm 8 with respect to the bracket 5 is detected with the aid of the potentiometer 23 disposed on the bracket 5.

For a working tool 21 thus configured, it is avoidable to dispose the potentiometers at the foundation of the vertical link 7, so serviceability is improved and maintenance is facilitated. In addition, there is no need to prepare a dedicated revolving frame to prevent interference with other components, and a general-purpose frame can be used directly, making it possible to hold the costs down.

The attitude angles of the working tool 21 are controlled in the manner described below on the basis of the differences between the angles of rotation $\beta$ and $\delta$ detected by the potentiometers 22 and 23, and the target attitude angles that correspond to the operating angles of the control lever 14.

The locus of the center of gravity W1 of the first arm 3 and the locus of the center of gravity W2 of the second arm 8 are shown by the chain lines in Fig. 2, and the corresponding moment of inertia J that acts on the first arm drive cylinder 4 is

$$J = (W1/g) \cdot r*2 + (W2/g) \cdot R*2 \qquad (1)$$

The term "*2" is defined as "squared" (same below).

On the other hand, the locus of the center of gravity W1' of the boom (first arm) a of a working tool having a conventional structure and the locus of the center of gravity W2' of an arm (second arm) c are shown by the chain lines in Fig. 7, and the corresponding moment of inertia J' that acts on the boom cylinder (first arm drive cylinder) b is

$$J' = (W1'/g) \cdot r*2 + (W2'/g) \cdot (r1)*2 \qquad (2)$$

A comparison of formulas 1 and 2 indicates that usually R < r1 and therefore R*2 << (r1)*2, so J << J', and the moment of inertia acting on the first arm drive cylinder 4 during the rotation of the first arm 3 is much less than that of a working tool with a conventional structure. The inertial load is therefore reduced and control accuracy improved.

Thus, a merit of this embodiment is that costs can be reduced and the attitude angles controlled with precisely.

Fig. 3 is a diagram depicting another embodiment, for which only the structural components of the working tool 21' are shown. The components designated by the same symbols as in Fig. 1 have the same functions. Specifically, in the embodiment depicted in Fig. 3, only the components corresponding to the first arm 3 are configured as a four-joint parallel link 7, the components corresponding to the second arm 8 are not configured as a parallel link structure and have an ordinary structure, and the tip bracket drive cylinder 20 for rotating the tip bracket 10 is linked to the second arm 8.

Fig. 4 depicts yet another embodiment, in which the first arm 3 and the first link 6 are supported on a revolving superstructure 2 via a rotating link 19a, and this rotating link 19a is rotated by a rotating link drive cylinder 19b.

The structure in Fig. 4 differs from the structure in Fig. 3 in that the first arm 3 is directly linked to the second arm 8 without the intermediary of the bracket 5.

Although the embodiments described above involved attaching the potentiometers 22 and 23 to the same surface 5a on one side of the intermediate bracket 5, other attachment surfaces are also acceptable.

Although the embodiments described above are based on the assumption that the working tool 21 is controlled in accordance with a conventional master/slave principle in which the control lever 14 functions as the master, and the working tool 21 as the slave, the concept is applicable to manipulators in general, that is, to "handling tools, devices, and machines which are capable of performing physical movements and changing their direction in space, which allow such movements or changes to be controlled at will by means located at a distance from the work head, and which are equipped with holders or work heads," and is not necessarily limited to the master/slave type of manipulator in which "both the controlling unit and the controlled unit perform corresponding spatial movements."

Control of the attitude angles of a manipulator having a working tool with the structure described above will now be described with reference to Figs. 8, 9, 10a, and 10b.

Here, a control lever 14 (master) has a first arm 3' and a second arm 8' similar in shape to the first arm 3 and second arm 8 of a working tool 21, as shown in Fig. 8. As a result, the first arm 3' of the control lever 14 is rotatably operated through a control input (attitude angle) $\alpha$, whereby the first arm 3 of the working tool 21 is turned by an angle $\beta$ that corresponds to the above-mentioned operating angle $\alpha$, and the attitude angle thereof is changed. Similarly, the second arm 8' of the control lever 14 is rotatably operated through a control input (attitude angle) $\gamma$, whereby the second arm 8 of the working tool 21 is turned by an angle $\delta$ that corresponds to the above-mentioned operating angle $\gamma$, and the attitude angle thereof is changed. Since the first arm 3 and the second arm 8 are controlled in the same manner, the first arm 3 alone will be described as a typical example.

The following procedure is performed as a preliminary procedure before control is started.

Specifically, a desired operating range $\alpha$min to $\alpha$max is determined for the first arm 3' of the control lever 14. The determination standard is selected to ensure comfortable operation without any burden being placed on the operator. This operating range can also be varied in accordance with the type of operation performed by the working tool 21, as shown separately in Figs. 10a and 10b.

A plurality of different operating angles $\alpha$1, $\alpha$2, and $\alpha$3 are then sampled from the above-mentioned desired operating range $\alpha$min to $\alpha$max (see Fig. 9). Meanwhile, a desired actuation range $\beta$min to $\beta$max is determined for the first arm 3 of the working tool 21. In this case as well, the operating range can also be varied in accordance with the type of operation performed by the working tool 21, as shown separately in Figs. 10a and 10b.

At this point, the above-mentioned sampled operating angles $\alpha$1, $\alpha$2, and $\alpha$3 and the attitude angles $\beta$1, $\beta$2, and $\beta$3 of the working tool 21 are correlated as shown by the broken lines in Figs. 9, 10a, and 10b in such a way that the first arm 3 of the working tool 21 is actuated within the desired actuation range $\beta$min to $\beta$max when the first arm 3' of the control lever 14 has been operated within the above-mentioned desired operating range $\alpha$min to $\alpha$max.

An interpolation is computed between the plurality of these correlated angles, and a prescribed correlation L1 or L2 is determined, as shown in Fig. 10a or 10b.

The interpolation method used here can vary in accordance with the type of operation.

Fig. 10a depicts an interpolation method in which emphasis is made on microscopic-scale operability near a point at which the operating angle of the control lever 14 is $\alpha$1. Fig. 10b depicts an interpolation method in which the speed of the working tool is lowered near the operating angles $\alpha$1 and $\alpha$3, and different characteristic correlations L1 and L2 can be determined in accordance with the specifics of the operation.

When it is determined what the correlation L1 or L2 is between the operating angles of the control lever within the desired operating range $\alpha$min to $\alpha$max, and the attitude angles of the working tool within the desired actuation range $\beta$min to $\beta$max, these correlations L1 and L2 are correlated with the types of operation, for example, with an operating mode 1 and an operating mode 2, respectively, and the results are stored in a table 24.

The preliminary procedure is thus completed.

The specifics of controlling the attitude angles after the above-mentioned preliminary procedure has been completed will now be described with reference to the control block diagram shown in Fig. 8.

First, the operator operates a selection switch (not shown) to select the operating mode best suited to the specifics of the current operation. Let us assume that an operating mode 1 corresponding to the above-mentioned correlation 1 has been selected as the operating mode.

Meanwhile, the current operating angle $\alpha$ of the first arm 3' is detected by a potentiometer (not shown) provided to the control lever 14, and the target attitude angle $\beta$d of the first arm 3 of the working tool 21 that corresponds to this current operating angle $\alpha$ is determined based on the correlations stored in the above-mentioned table 24. Because in this case the operating mode 1 is currently selected, the correlation L1 corresponding to the selected operating mode 1 is read from the table 24, and the above-mentioned target attitude angle $\beta$d is determined based on this correlation L1.

The attitude angles of the first arm 3 of the working tool 21 are subsequently controlled in such a way that the determined target attitude angle $\beta$d is obtained. Specifically, the current angle of rotation $\beta$ of the first arm 3 is detected by a potentiometer 22, the detected value $\beta$ is used as the feedback volume, the difference between the above-mentioned target value $\beta$d and the feedback volume $\beta$ is determined, and the result is applied to a gain multiplier 25. In the gain multiplier 25, the difference $\beta$d - $\beta$ is increased by a predetermined gain K, and a drive command value corresponding to the difference $\beta$d - $\beta$ increased by the predetermined gain K is applied to a drive controller (not shown). This drive controller drives the drive cylinder of the working tool 21 in such a way that the above-mentioned difference $\beta$d - $\beta$ becomes zero.

This embodiment thus involves determining the correlations L1 and L2 in advance, storing these correlations in the table 24, and performing control by merely reading these without requiring complicated computing. The burden on the computer is therefore reduced, there is no need to have a CPU with high computing power, and the costs are dramatically reduced.

In addition, the time needed for the computational processing can be reduced substantially.

Because the operating range of the control lever 14 is set within a range that can ensure comfortable operation for the operator, operability can be improved and the attitude angles controlled with better accuracy.

In addition, operations are conducted based on the operating characteristics suited to the type of operation, so operability is improved and the attitude angles are controlled with better accuracy.

This embodiment was described with reference to controlling the first arm 3, but the second arm 8 can be controlled in the same manner as described above.

In addition, the method for storing the correlations L1 and L2 in the table 24 may involve storing data in the form of functions or other mathematical expressions, or in the form of mathematical tables. To reduce the computing time, it is better to use a method in which data are stored as mathematical tables and βd is directly read from inputted α values than to use a method in which data are stored in the form of functions or other mathematical expressions and βd (function values) are determined based on inputted α values (variables).

This embodiment was described with reference to a case in which the attitude angles were controlled in the manner shown in Fig. 8, on the assumption that the manipulator had a working tool 21 with the structure shown in Fig. 1, but the working tool whose attitude angles are controlled as shown in Fig. 8 can have any structure, such as the structure shown in Figs. 3 or 4, or the conventional structure shown in Fig. 11.

INDUSTRIAL APPLICABILITY

As described above, the present invention involves the use of the first arm of the working tool of a manipulator in the form of a four-joint link mechanism, so the arm rotational angle sensors can be disposed on the tip portions of the arms instead of on the foundation components of the arms. As a result, the load applied to the actuators for driving the arms can be reduced and control is performed precisely. This also solves the problem of impaired serviceability caused by the need for a dedicated revolving frame (when, for example, the sensors are installed on the foundation components); markedly improves serviceability; and dramatically reduces costs.

This invention also allows the operating range of a control lever to be set within the desired limits and obviates the need for computing during control. As a result, control accuracy is improved due to improved operability, and the costs are dramatically reduced because there is no need for a computer with high computing power. In addition, computing and processing capabilities are substantially improved.

The present invention allows the transverse dimensions of a bilateral master/slave type of control apparatus to be reduced, and equipment to be easily accommodated inside a small cabin.

In addition, the above-mentioned control apparatus moves together with the operator's seat when the latter moves forward and backward, so the control apparatus can be operated with a constant tactile feedback at all times.

**Claims**

1. A manipulator for driving and controlling a working tool in accordance with an operation of a control lever, wherein the manipulator comprises:
   a working tool configured in such a way that a first arm of the working tool consists of a four-joint link mechanism wherein two joints at one-side ends of this first arm are disposed rotatably on a base while two joints at another-side ends of the first arm are rotatably linked to one-side ends of a second arm.

2. A manipulator for driving and controlling a working tool in accordance with the operation of a control lever, wherein the manipulator comprises:
   a working tool configured in such a way that the first arm of the working tool consists of a four-joint link mechanism wherein two joints at one-side ends of this first arm are disposed rotatably on a base while two joints at the other-side ends of the first arm are rotatably disposed on a bracket, and one end of the second arm of the working tool and one end of an actuator for driving the second arm are rotatably disposed on the bracket.

3. A manipulator for controlling attitude angles of a working tool on the basis of operating angles of a control lever and current attitude angles of the working tool, wherein the manipulator comprises:
   a working tool configured in such a way that the first arm of the working tool consists of a four-joint link mechanism, two joints at one-side ends of this first arm being disposed rotatably on a base while two joints at the other-side ends of the first arm are rotatably disposed on a bracket, and one end of the second arm of the working tool and one end of an actuator for driving the second arm are rotatably disposed on the bracket;
   a first rotational angle sensor for detecting an angle of rotation of the first arm; and
   a second rotational angle sensor for detecting the angle of rotation of the second arm,
   the attitude angles of the working tool being controlled based on operating angles of the control lever and on angles of rotation detected by the first and second rotational angle sensors.

4. A manipulator for controlling the attitude angles of a working tool on the basis of operating angles of a control lever and current attitude angles of the working tool, wherein the manipulator comprises:
   a working tool configured in such a way that the first arm of the working tool consists of a four-joint link mechanism, two joints at one-side ends of this first arm are disposed rotatably on a base while two joints at the other-side ends of the first arm are rotatably disposed on a bracket, and one end of the second arm of the working tool and one end of an actuator for driving the second arm are rotatably disposed on the bracket;

a first rotational angle sensor disposed on the first arm attachment portion of the bracket, for detecting the angle of rotation of the first arm; and

a second rotational angle sensor disposed on the second arm attachment portion of the bracket, for detecting the angle of rotation of the second arm,

the attitude angles of the working tool being controlled based on operating angles of the control lever and on angles of rotation detected by the first and second rotational angle sensors.

5. A manipulator as defined in Claim 4, wherein the first and second rotational angle sensors are disposed on the same surface outside the bracket.

6. A master/slave type of manipulator for executing control by changing the attitude angles of a working tool on the slave side in accordance with the operating angles of a control lever on the master side, wherein the master/slave type of manipulator comprises:

interpolation means for sampling a plurality of different operating angles from within a desired operating range of the control lever, correlating the sampled plurality of operating angles with attitude angles of the working tool in such a way that the working tool is actuated within a desired actuation range when the control lever is operated within the desired operating range, and performing interpolation between the plurality of correlated angles;

storage means for storing correlations between attitude angles of the working tool within desired actuation range and operating angles of the control lever within the desired operating range determined by interpolation with the aid of the interpolation means; and

control means for determining, based on correlations stored in the storage means, attitude angles of the working tool that correspond to current operating angles of the control lever, and controlling attitude angles of the working tool in such a way that the determined attitude angles are obtained.

7. A master/slave type of manipulator as defined in Claim 6, wherein the interpolation means performs interpolation in accordance with the type of operation executed by the working tool;

the storage means stores correlations in accordance with the type of operation; and

the control means reads, from data stored in the storage means, the correlation that corresponds to the selected type of operation when the type of operation has been selected, and controls attitude angles of the working tool on the basis of the correlation thus read.

8. A master/slave type of manipulator as defined in Claim 6, wherein the working tool comprising a plurality of arms each of which has different degrees of freedom, and the control lever operates each of the plurality of arms independently, and correlations are determined for each arm and stored in the storage means in accordance with each arm.

9. A master/slave type of manipulator as defined in Claim 8, wherein the working tool has a first arm and a second arm, the first arm consisting of a four-joint link mechanism, two joints at one-side ends of this first arm are disposed rotatably on a base, two joints at the other-side ends of the first arm are rotatably disposed on a bracket, and one end of the second arm and one end of the actuator for driving the second arm are rotatably disposed on the bracket.

10. A bilateral master/slave type of manipulator for executing control by changing the attitude angles of a working tool on the slave side by means of a rotatable operation of a control lever on the master side, wherein the bilateral master/slave type of manipulator comprises:

an actuator disposed near the control lever in such a way that a longitudinal direction of the actuator for exerting an operation reaction force is roughly parallel to a plane of rotation of the control lever.

11. A manipulator, wherein an operator's seat is disposed in such a way that it can move forward and backward, and a control lever is disposed on one side of the seat in such a way that movement together with the seat is possible.

**FIG.1(a)**

**FIG.1(b)**

FIG.2

FIG.3

**FIG.4**

FIG.5

FIG.6

# FIG.7

**FIG.8**

**FIG.9**

**FIG.10(a)**

**FIG.10(b)**

**FIG.11**

FIG.12

EP 0 723 840 A1

# FIG.13

34

32

56

51b

36

37

51a

31

33

35

**FIG.14**

## INTERNATIONAL SEARCH REPORT

| | International application No. |
|---|---|
| | PCT/JP94/01147 |

**A. CLASSIFICATION OF SUBJECT MATTER**

Int. Cl$^5$ B25J9/06

According to International Patent Classification (IPC) or to both national classification and IPC

**B. FIELDS SEARCHED**

Minimum documentation searched (classification system followed by classification symbols)

Int. Cl$^5$ B25J9/06, 3/00

Documentation searched other than minimum documentation to the extent that such documents are included in the fields searched

Jitsuyo Shinan Koho        1926 - 1994
Kokai Jitsuyo Shinan Koho  1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, U, 63-100176 (Komatsu Ltd.), | 1 |
| Y | June 29, 1988 (29. 06. 88), (Family: none) | 2-11 |
| Y | JP, U, 50-37280 (Toshiba Corp.), April 18, 1975 (18. 04. 75), (Family: none) | 2, 3 |
| Y | JP, U, 56-151788 (Tokico Co., Ltd.), November 13, 1981 (13. 11. 81), (Family: none) | 4, 5 |
| Y | JP, A, 2-71979 (Hitachi, Ltd.), March 12, 1990 (12. 03. 90), (Family: none) | 6-9 |
| Y | JP, A, 50-96796 (Kobe Steel, Ltd.), August 1, 1973 (01. 08. 73), (Family: none) | 10, 11 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| October 6, 1994 (06. 10. 94) | October 25, 1994 (25. 10. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)